# EUROPEAN PATENT SPECIFICATION

(11) **EP 2 129 137 B1**
(45) Date of publication and mention of the grant of the patent: **09.09.2015**
(21) Application number: 07855949.9
(22) Date of filing: 29.12.2007
(51) Int. Cl.: H04W 84/02

(54) **A method for establishing IP bearer of mobile communication system**
Verfahren zur Herstellung eines IP-Trägers eines Mobilkommunikationssystems
Un procédé pour l'établissement du porteur IP de système de communication mobile

(30) Priority: 30.01.2007 CN 200710073170; 30.01.2007 CN 200710073171
(43) Date of publication of application: 02.12.2009
(73) Proprietor: ZTE Corporation, Shenzhen, Guangdong 518057 (CN)
(72) Inventor: WANG, Xinhui, Shenzhen, Guangdong 518057 (CN); WEI, Wenqiang, Shenzhen, Guangdong 518057 (CN); LING, Jun, Shenzhen, Guangdong 518057 (CN)
(74) Representative: Bergmeier, Werner
(86) International application number: PCT/CN2007/003949
(87) International publication number: WO 2008/092338

(56) References cited:
- WO-A1-01/56315
- WO-A2-2004/017585
- CN-A- 1 499 850
- CN-A- 1 736 074
- CN-A- 1 870 650
- US-A1- 2002 015 392
- US-A1- 2003 007 496
- US-A1- 2003 012 154
- US-B1- 6 879 599
- US-B1- 7 120 133
- "3rd Generation Partnership Project;Technical Specification Group GERAN;A-interface over IP Study (????);(Release 8)", 3GPP DRAFT; GP-071726, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Vancouver; 20071106, 6 November 2007 (2007-11-06), XP050019073, [retrieved on 2007-11-06]
- MUSIKKA N ET AL: "ERICSSON'S IP-BASED BSS AND RADIO NETWORK SERVER", ERICSSON REVIEW (INCL. ON), TELEFONAKTIEBOLAGET L M ERICSSON, SE, vol. 77, no. 4, 1 January 2000 (2000-01-01), pages 224-233, XP000969930, ISSN: 0014-0171

## Description

### Technical Field

The present invention relates to the field of a mobile communication, and more specifically, relates to a method for establishing IP bearer in the mobile communication system.

### Background

In GSM (Global System for Mobile Communications) communication system, the bearer of interface A between the Mobile Switching Centre (MSC) and the Base Station Controller (BSC) is based on Time Division Multiplex (TDM) in the prior art. The TDM bearer of interface A is relatively simple to be established through assigning a Circuit Identity Code (CIC) in the assignment message of the interface A signaling.

In IP bearer, the IP connection should be established between MSC and BSC. The other party's IP address and port number should be determined when establishing the IP bearer, thus the MSC and BSC should exchange their IP address and port number for establishing the bearer.

The technical scheme implemented in the present mobile communication network only achieves the control plane signaling based on IP bearer of interface A, while there is no scheme for the user plane data to use IP bearer.

Document US6879599 discloses the establishment of an IP bearer using the CIC.

### Content of the Invention

The present invention provides a method for establishing an IP bearer in the mobile communication system to implement the IP bearer of user plane data of an interface A in the GSM system.

In order to solve the above technical problem, the present invention provides a method for establishing an IP bearer in the mobile communication system, and the method is used in the GSM system including a mobile terminal, a mobile switching centre (MSC) and a base station controller (BSC), wherein, said MSC is connected with BSC through the interface A, and the interface A establishes the bearer with said MSC and BSC respectively through the CIC, and the method comprising: establishing respectively in said MSC and BSC mapping tables between a Circuit Identity Code and Internet Protocol addresses and port numbers of the MSC and BSC;
one of said MSC and BSC informing, by carrying a corresponding CIC in an interaction message, the other of the MSC and BSC the IP addresses and port numbers thereof selected for a user plane bearer, wherein, the other of said mobile switching centre and base station controller obtains the Internet Protocol address and port number thereof selected for the user plane IP bearer by inquiring the mapping table established in the previous step according to the Circuit Identity Code;
whereby establishing the user plane IP bearer for said mobile terminal is implemented. Furthermore, the above method may have the following feature: when said mobile terminal is a calling party, said informing comprises:
a) said mobile terminal initiating a calling request, and said MSC receives a call management service request message;
b) said MSC selecting according to a service type of said request message a corresponding coding, a MSC's local IP address and port number, converting by searching in the mapping table according to the IP address and port number into the coding into a corresponding CIC, and informing said BSC through an assignment request message;
c) said BSC acquiring by searching according to the CIC in said assignment request message in the mapping table therein said MSC's IP address and port number, and said BSC's local IP address and port number, implementing establishing the bearer thereof, sending an assignment completion message to said MSC, and said MSC receiving the message implementing establishing the bearer thereof.

Furthermore, the above method may have the following feature: when said mobile terminal is the called party, said informing comprises:
a) said MSC initiating a paging request to said mobile terminal;
b) said mobile terminal receiving said paging request and sending a call management service request message to said MSC;
c) said MSC selecting according to the service type of said call management service request message a corresponding coding, a MSC local IP address and port number, converting by searching in the mapping table according to the IP address and port number into the corresponding CIC, and informing said BSC through the assignment request message;
d) said BSC acquiring by searching according to the CIC in said assignment request message in the mapping table therein said MSC's IP address and port number and said BSC's local IP address and port number implementing establishing the bearer therein, sending the assignment complete message to said MSC, and said mobile switching centre receiving said assignment completion message implementing establishing the bearer therein.

Furthermore, the above method may have the following feature: when performing a handover, said informing comprises:
a) said MSC selecting according to a service type of a handover request a corresponding coding, a mobile switching centre's local IP address and port number, converting by searching in the mapping table into the corresponding CIC, and informing said BSC through the handover request message;
b) Said BSC acquiring by searching according to the CIC in said assignment request message in the mapping table therein said MSC's and its local IP address and port number and a base station controller's Internet Protocol address and port number implementing establishing the bearer thereof, sending an handover request message to said MSC, and said MSC receiving said handover request acknowledge message implementing establishing the bearer thereof.

Furthermore, the above method may have the following feature: after the IP bearer is established, said method further comprises the following steps of: after the call finishes, said MSC and BSC releasing the bearer related to this call respectively.

With this technology, the IP bearer of user plane data can be implemented on the premise that the present control plane signaling of interface A is not changed.

### Brief Description of Drawings

- **FIG. 1**: is a flow chart of IP bearer establishment on the condition that the mobile terminal (MT) is the calling party in accordance with the first embodiment of the present invention;
- **FIG. 2**: is a flow chart of IP bearer establishment on the condition that the MT is the called party in accordance with the first embodiment of the present invention;
- **FIG. 3**: is a flow chart of IP bearer establishment on the condition of handover in accordance with the first embodiment of the present invention;
- **FIG. 4**: is a flow chart of IP bearer establishment on the condition that the MT is the calling party in accordance with the second embodiment of the present invention;
- **FIG. 5**: is a flow chart of IP bearer establishment on the condition that the MT is the called party in accordance with the second embodiment of the present invention;
- **FIG. 6**: is a flow chart of IP bearer establishment on the condition of handover in accordance with the second embodiment of the present invention.

### The Preferred Embodiments of the Present Invention

The technical scheme of the present invention will be described in further detail with combination of the accompanying figures and embodiments.

In GSM communication system, the function of the Transcoder/Rate Adaptor Unit (TRAU) between said BSC and MSC has the following three distribution modes:
1. The TRAU and BSC are deployed together, wherein the TRAU is a part of the BSC and internal interface is used between the TRAU and the BSC, the BSC is connected with the MSC through interface A;
2. The TRAU and MSC are deployed together, but the TRAU is a part of BSC rather than a part of the MSC, the TRAU and the MSC are connected with each other through interface A, while the TRAU and the BSC are connected with each other through interface After;
3. The TRAU and MSC are deployed together, the TRAU is a part of the MSC and internal interface is used between the TRAU and the MSC, the MSC is connected with the BSC through interface A;

For each mode, the bearer of the user plane data of interface A / interface Ater is implemented by applying Real Time Protocol (RTP)/User Datagram Protocol (UDP).

How to exchange IP address and port number between the MSC and the BSC to establish the IP bearer will be described in detail with the following two embodiments.

### The embodiment

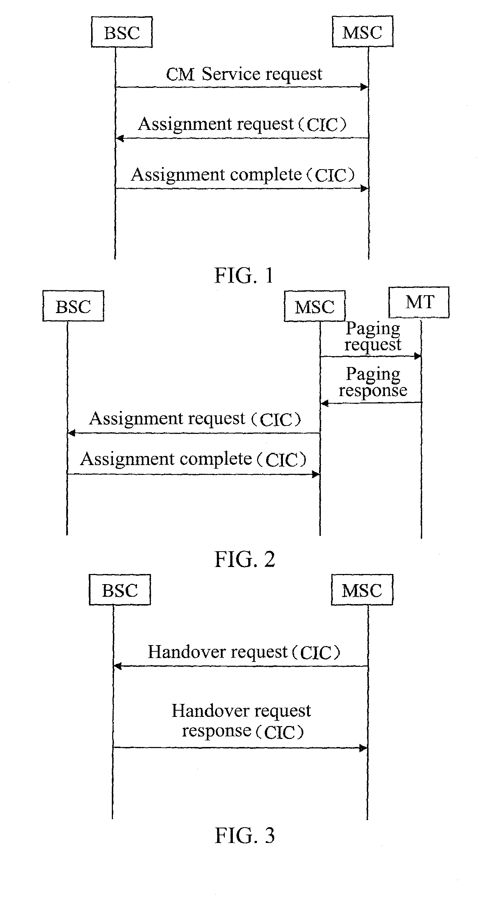

This embodiment establishes the mapping tables between CIC and the IP address and port number of the MSC and BSC and the mapping tables are shown in FIG. 1 and FIG. 2 respectively.

**Table 1 the mapping table in the MSC**

| CIC | MSC IP ADDRESS | MSC IP PORT NUMBER | BSC IP ADDRESS | BSC IP PORT NUMBER |
|---|---|---|---|---|
| | | | | |
| ... | | | | |

**Table2 the mapping table in the BSC**

| CIC | BSC IP ADDRESS | BSC IP PORT NUMBER | MSC IP ADDRESS | MSC IP PORT NUMBER |
|---|---|---|---|---|
| | | | | |
| ... | | | | |

That is, through the configuration, determine the one to one correspondence between the CIC and the IP address and port number of the MSC, as well as between the CIC and the IP address and port number of the BSC. The CIC can be considered as the connection number of the connection relationship between the MSC and the BSC. By determining the CIC, the establishment relationship of the IP bearer is determined. The MSC implements the IP bearer establishment by assigning the CIC. The MSC uniquely determines both MSC's and BSC's IP address and port number through the CIC, so as the BSC, thus the IP address and port number are exchanged between the MSC and the BSC through message interaction to establish the IP bearer of the user plane. This technology can implement the IP bearer of the user plane data on the premise that the control plane signaling of interface A is not changed.

The specific steps of the above message interaction is shown in FIG. 1, FIG. 2 and FIG. 3, wherein FIG. 1 is a flow chart of IP bearer establishment when the MT is the calling party, and it comprises the following steps:
a) The MT initiates a call request, and said MSC receives the call management service (CM) request message; The MT initiates a call request message, and the BSC encapsulates the message after the message is arrived at the BSC through Um interface and Abis interface, and the encapsulated message is referred to as the CM service request message.
b) Said MSC selects the corresponding encoding, its local IP address and port number according to the service type of said request message, converts them to the corresponding CIC by searching in the mapping table according to the IP address and port number, and informs said BSC about the information through the assignment request message;
c) Said BSC searches in its mapping table to acquire both said MSC's and its local IP address and port number to establish its bearer according to the CIC in said assignment message, and sends assignment complete message to said MSC which establishes its bearer after receiving the message.

FIG. 2 is a flow chart of the signaling of IP bearer establishment when the MT is the called party, and it comprises the following steps:
a) Said MSC initiates paging request to the MT;
b) Said MT sends CM service request message to said MSC after receiving said paging request;
c) Said MSC selects the corresponding encoding, its local IP address and port number according to the service type of said request message, converts them to the corresponding CIC by searching in the mapping table, and informs said BSC about the information through the assignment request message;
d) Said BSC searches in its mapping table to acquire both said MSC's and its local IP address and port number to establish its bearer according to the CIC in said assignment request message, and sends assignment complete message to said MSC which establishes its bearer after receiving the message.

FIG. 3 is a flow chart of signaling of IP bearer establishment on the condition of handover, and it comprises the following steps:
a) Said MSC selects the corresponding encoding, its local IP address and port number according to the service type of said handover request, converts them to the corresponding CIC by searching in the mapping table, and informs said BSC about the information through the handover request message;
b) Said BSC searches in its mapping table to acquire both said MSC's and its local IP address and port number to establish its bearer according to the CIC in said assignment message, and sends assignment complete message to said MSC which establishes its bearer after receiving the message.

The information interaction in these three modes can smoothly exchange the IP address and port number by establishing the mapping tables, thus implement the IP bearer of the user plane data.

An example not falling under the scope of the claims This example extends the content of control plane message such as assignment request, assignment complete, handover request and handover request acknowledge to make the above message have the relevant information unit with the user plane's IP address and port number, thus exchange IP address and port number through message interaction, and establish the user plane IP bearer while do not change the present signaling interaction process. The method specifically comprises:

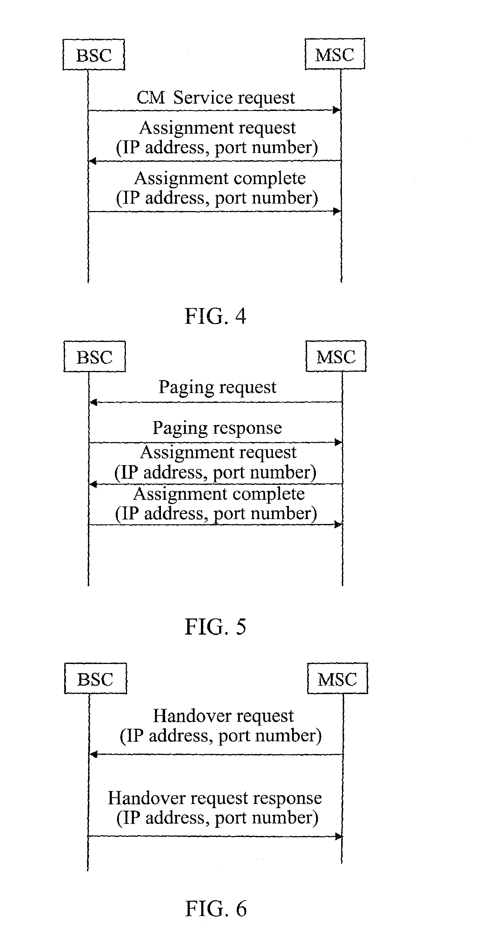

As shown in FIG. 4, the steps of IP bearer establishment when the MT is the calling party are:
a) Said MT initiates a call request, and said MSC receives the CM service request message;
b) Said MSC selects the corresponding encoding, its local IP address and port number according to the service type of said CM service request message, and informs said BSC about the information through the assignment request message;
c) Said BSC acquires the corresponding encoding, said MSC's IP address and port number according to said assignment request message, selects its local IP address and port number to establish its bearer, and informs said MSC about its local IP address and port number through said assignment complete message, said MSC establishes its bearer based on said BSC's IP address and port number in the received assignment complete message;

After the call finishes, the MSC and BSC release the bearer related to the call respectively.

FIG5 shows the steps of IP bearer establishment when the MS is the called party, and the steps are:
a) Said MSC initiates paging request to said mobile terminal;
b) Said mobile terminal sends CM service request message to said MSC after receiving said paging request;
c) Said MSC selects the corresponding encoding, its local IP address and port number according to the service type of said request message, and informs said BSC about the information through the assignment request message;
d) Said BSC acquires the corresponding encoding, said MSC's IP address and port number according to said assignment request message, selects its local IP address and port number to establish its bearer, and informs said MSC about its local IP address and port number through said assignment complete message, said MSC establishes its bearer based on said BSC's IP address and port number in the received assignment complete message;

After the call finishes, the MSC and BSC release the bearer related to the call respectively.

FIG. 6 illustrates the steps of IP bearer establishment on the condition of handover;
a) Said MSC selects the corresponding encoding, its local IP address and port number according to the service type of said handover request, and informs said BSC about the information through the handover request message;
b) Said BSC acquires the corresponding encoding, said MSC's IP address and port number according to said handover request message, selects its local IP address and port number to establish its bearer, and informs said MSC about its local IP address and port number through said handover request acknowledge message, and said MSC establishes its bearer according to the BSC's IP address and port number in the received handover request acknowledge message.

### Industrial Application

With the method of the present invention, the IP address and port number can be exchanged between the MSC and the BSC through message interaction, thus establish the user plane IP bearer. The implementation of this technology is simple.

## Claims

1. A method for establishing an Internet Protocol bearer in a mobile communication system, the method being used in a Global System for Mobile Communication including a mobile terminal, a mobile switching centre and a base station controller, said mobile switching centre being connected with said base station controller through an interface A, and said interface A establishing the bearer with said mobile switching centre and said base station controller respectively through a Circuit Identity Code, the method comprising:
establishing respectively in said mobile switching centre and the base station controller mapping tables between a Circuit Identity Code and
Internet Protocol addresses and port numbers of the mobile switching centre and the base station controller;
one of said mobile switching centre and base station controller informing, by carrying a corresponding Circuit Identity Code in an interaction message, the other of said mobile switching centre and base station controller of the Internet Protocol address and port number thereof selected for an user plane IP bearer, wherein, the other of said mobile switching centre and base station controller obtains the Internet Protocol address and port number thereof selected for the user plane IP bearer by inquiring the mapping table established in the previous step according to the Circuit Identity Code;
whereby establishing the user plane IP bearer for said mobile terminal is implemented.

2. A method for establishing the Internet Protocol bearer of claim 1,
wherein
when said mobile terminal is a calling party, said informing comprises:
a) said mobile terminal initiating a calling request, and said mobile switching centre receiving a call management service request message;
b) said mobile switching centre selecting according to a service type of said request message a corresponding coding, a mobile switching centre's local Internet Protocol address and port number, converting by searching in the mapping table according to the Internet Protocol address and port number into the corresponding Circuit Identity Code, and informing through an assignment request message said base station controller;
c) said base station controller acquiring by searching according to the Circuit Identity Code in said assignment request message in the mapping table therein said mobile switching centre's Internet Protocol address and port number and said base station controller's local Internet Protocol address and port number implementing establishing the bearer thereof, and then, sending an assignment completion message to said mobile switching centre, and said mobile switching centre receiving said assignment completion message implementing establishing the bearer thereof.

3. A method for establishing the Internet Protocol bearer of claim 1,
wherein
when said mobile terminal is the called party, said informing comprises:
a) said mobile switching centre initiating a paging request to said mobile terminal;
b) said mobile terminal receiving said paging request and sending a call management service request message to said mobile switching centre;
c) said mobile switching centre selecting according to a service type of said call management service request message a corresponding coding, a mobile switching centre's local Internet Protocol address and port number, converting by searching in the mapping table according to the Internet Protocol address and port number into the corresponding Circuit Identity Code, and informing through the assignment request message said base station controller;
d) said base station controller acquiring by searching according to the Circuit Identity Code in said assignment request message in the mapping table therein said mobile switching centre's Internet Protocol address and port number and said base station controller's local Internet Protocol address and port number implementing establishing the bearer thereof, sending an assignment completion message to said mobile switching centre, and said mobile switching centre receiving said assignment completion message implementing establishing the bearer thereof.

4. A method for establishing the Internet Protocol bearer of claim 1,
wherein
when performing a handover, said informing comprises:
a) said mobile switching centre selecting according to a service type of a handover request message a corresponding coding, a mobile switching centre's local Internet Protocol address and port number, converting by searching in the mapping table into the corresponding Circuit Identity Code, and informing through the handover request message said base station controller;
b) said base station controller acquiring by searching according to the Circuit Identity Code in said handover request message in the mapping table therein said mobile switching centre's Internet Protocol address and port number and a base station controller's Internet Protocol address and port number implementing establishing the bearer thereof, sending an handover request acknowledge message to said mobile switching centre, and said mobile switching centre receiving said handover request acknowledge message implementing establishing the bearer thereof.

5. A method for establishing the Internet Protocol bearer of claim 1,
wherein
after the Internet Protocol bearer is established, said method further comprises the following steps of: after a call finishes, said mobile switching centre and base station controller releasing the bearer related to the call respectively.

## Patentansprüche

1. Verfahren zum Einrichten eines Internet-Protokoll-Trägers in einem Mobil-Kommunikationssystem, wobei das Verfahren in einem Globalen System für Mobilkommunikation verwendet wird, das ein mobiles Endgerät, ein Mobile Switching Centre und einen Base Station Controller enthält, wobei das besagte Mobile Switching Centre mit dem besagten Base Station Controller über eine Schnittstelle A verbunden ist und die besagte Schnittstelle A den Träger mit dem besagten Mobile Switching Centre bzw. besagten dem Base Station Controller über einen Circuit Identity Code einrichtet, wobei das Verfahren umfasst:
Einrichten jeweils im besagten Mobile Switching Centre und im Base Station Controller von Zuordnungstabellen zwischen einem Circuit Identity Code und Internet-Protokoll-Adressen und Port-Nummern des Mobile Switching Centre und des Base Station Controllers;
wobei eins von dem besagten Mobile Switching Centre und dem besagten Base Station Controller durch Übertragen eines entsprechenden Circuit Identity Code in einer Interaktionsmeldung das andere von dem besagten Mobile Switching Centre und dem besagten Base Station Controller über die Internet-Protokoll-Adresse und Port-Nummer davon informiert, die für einen Benutzerebenen-IP-Träger gewählt sind, wobei das andere von dem besagten Mobile Switching Centre und dem Base Station Controller die Internet-Protokoll-Adresse und Port-Nummer davon, die für den Benutzerebenen-IP-Träger gewählt sind, durch Nachschlagen in der im vorherigen Schritt eingerichteten Zuordnungstabelle anhand des Circuit Identity Codes erlangt;
wodurch das Einrichten des Benutzerebenen-IP-Trägers für das besagte mobile Endgerät ausgeführt ist.

2. Verfahren zum Einrichten des Internet-Protokoll-Trägers nach Anspruch 1, wobei,
wenn das besagte mobile Endgerät ein anrufender Teilnehmer ist, das besagte Informieren umfasst:
a) Initiieren einer Anrufanforderung durch das besagte mobile Endgerät und Empfangen einer Anrufmanagement-Dienstanforderungsmeldung durch das Mobile Switching Centre;
b) Wählen seitens des besagten Mobile Switching Centre je nach einem Diensttyp der besagten Anforderungsmeldung einer entsprechenden Codierung, einer lokalen Internet-Protokoll-Adresse und Port-Nummer des Mobile Switching Centre, Umwandeln in den entsprechenden Circuit Identity Code durch Suchen in der Zuordnungstabelle gemäß der Internet-Protokoll-Adresse und Port-Nummer und Informieren des besagten Base Station Controllers über eine Zuweisungsanforderungsmeldung;
c) Erlangen der Internet-Protokoll-Adresse und Port-Nummer des besagten Mobile Switching Centre und der lokalen Internet-Protokoll-Adresse und Port-Nummer des besagten Base Station Controllers seitens des besagten Base Station Controllers durch Suchen gemäß dem Circuit Identity Code in der besagten Zuweisungsanforderungsmeldung in der Zuordnungstabelle darin und dadurch Ausführen des Einrichtens des Trägers davon, und dann Senden einer Zuweisungserledigungsmeldung an das besagte Mobile Switching Centre und Empfangen der besagten Zuweisungserledigungsmeldung durch das Mobile Switching Centre und dadurch Ausführen des Einrichtens des Trägers davon.

3. Verfahren zum Einrichten des Internet-Protokoll-Trägers nach Anspruch 1, wobei,
wenn das besagte mobile Endgerät der angerufene Teilnehmer ist, das besagte Informieren umfasst:
a) Initiieren eines Suchrufs an das besagte mobile Endgerät durch das besagte Mobile Switching Centre;
b) Empfangen des besagten Suchrufs durch das besagte mobile Endgerät und Senden einer Anrufmanagement-Dienstanforderungs-Meldung an das besagte Mobile Switching Centre;
c) Wählen seitens des besagten Mobile Switching Centre einer entsprechenden Codierung, einer lokalen Internet-Protokoll-Adresse und Port-Nummer des Mobile Switching Centre je nach einem Diensttyp der besagten Anrufmanagement-Dienstanforderungs-Meldung, Umwandeln in den entsprechenden Circuit Identity Code durch Suchen in der Zuordnungstabelle gemäß der Internet-Protokoll-Adresse und Port-Nummer und Informieren des Base Station Controllers über die besagte Zuweisungsanforderungsmeldung;
d) Erlangen der Internet-Protokoll-Adresse und Port-Nummer des besagten Mobile Switching Centre und der lokalen Internet-Protokoll-Adresse und Port-Nummer des besagten Base Station Controllers seitens des besagten Base Station Controllers durch Suchen gemäß dem Circuit Identity Code in der besagten Zuweisungsanforderungsmeldung in der Zuordnungstabelle darin und dadurch Ausführen des Einrichtens des Trägers davon, Senden einer Zuweisungserledigungsmeldung an das besagte Mobile Switching Centre und Empfangen der besagten Zuweisungserledigungsmeldung durch das besagte Mobile Switching Centre und dadurch Ausführen des Einrichtens des Trägers davon.

4. Verfahren zum Einrichten des Internet-Protokoll-Trägers nach Anspruch 1, wobei
das besagte Informieren beim Durchführen einer Übergabe umfasst:
a) Wählen seitens des besagten Mobile Switching Centre je nach einem Diensttyp einer Übergabeanforderungsmeldung einer entsprechenden Codierung, einer lokalen Internet-Protokoll-Adresse und Port-Nummer des Mobile Switching Centre, Umwandeln in den entsprechenden Circuit Identity Code durch Suchen in der Zuordnungstabelle und Informieren des Base Station Controllers über die Übergabeanforderungsmeldung;
b) Erlangen der Internet-Protokoll-Adresse und Port-Nummer des besagten Mobile Switching Centre und einer Internet-Protokoll-Adresse und Port-Nummer eines Base Station Controllers seitens des besagten Base Station Controllers durch Suchen gemäß dem Circuit Identity Code in der besagten Übergabeanforderungsmeldung in der Zuordnungstabelle darin und dadurch Ausführen des Einrichtens des Trägers davon, Senden einer Übergabeanforderungsrückmeldung an das besagte Mobile Switching Centre und Empfangen der besagten Übergabeanforderungsrückmeldung durch das besagte Mobile Switching Centre und dadurch Ausführen des Einrichtens des Trägers davon.

5. Verfahren zum Einrichten des Internet-Protokoll-Trägers nach Anspruch 1, wobei
nach dem Einrichten des Internet-Protokoll-Trägers das besagte Verfahren weiter die folgenden Schritte umfasst: nach dem Beenden eines Gesprächs das Freigeben des zum Gespräch gehörigen Trägers durch das besagte Mobile Switching Centre b.zw. den besagten Base Station Controller.

## Revendications

1. Méthode pour établir un support de protocole Internet dans un système de communications mobiles, la méthode étant utilisée dans un système global de communications mobiles comprenant un terminal mobile, un centre de commutation mobile et un contrôleur de station de base, ledit centre de commutation mobile étant connecté audit contrôleur de station de base via une interface A, et ladite interface A établissant le support avec ledit centre de commutation mobile et ledit contrôleur de station de base respectivement via un code d'identité de circuit, la méthode comprenant les étapes suivantes :
établir respectivement dans ledit centre de commutation mobile et le contrôleur de station de base des tables de correspondance entre un code d'identité de circuit et des adresses de protocole Internet et des numéros de ports du centre de commutation mobile et du contrôleur de station de base ;
l'un desdits centre de commutation mobile et contrôleur de station de base, en portant un code d'identité de circuit correspondant dans un message d'interaction, informant l'autre desdits centre de commutation mobile et contrôleur de station de base de l'adresse de protocole Internet et du numéro de port sélectionné sur lui pour un support IP de plan utilisateur, dans laquelle l'autre desdits centre de commutation mobile et contrôleur de station de base obtient l'adresse de protocole Internet et le numéro de port sélectionné sur lui pour le support IP de plan utilisateur en requérant la table de correspondance établie dans l'étape précédente conformément au code d'identité de circuit ;
sachant que l'établissement du support IP de plan utilisateur pour ledit terminal mobile est implémenté.

2. Méthode pour établir le support de protocole Internet selon la revendication 1, dans laquelle
lorsque ledit terminal mobile est une partie appelante, ladite étape d'information comprend :
a) ledit terminal mobile initie une demande d'appel et ledit centre de commutation mobile reçoit un message de demande de service de gestion des appels ;
b) ledit centre de commutation mobile sélectionne conformément à un type de service dudit message de demande un codage correspondant, une adresse de protocole Internet locale et un numéro de port du centre de commutation mobile, converti en le code d'identité de circuit correspondant en cherchant dans la table de correspondance conformément à l'adresse de protocole Internet et au numéro de port et informe ledit contrôleur de station de base par un message de demande d'assignation ;
c) ledit contrôleur de station de base, en cherchant conformément au code d'identité de circuit dans ledit message de demande d'assignation dans la table de correspondance qui y est contenue, acquiert l'adresse de protocole Internet et le numéro de port dudit centre de commutation mobile et l'adresse de protocole Internet locale et le numéro de port dudit contrôleur de station de base implémentant l'établissement de son support, puis envoie un message d'achèvement d'assignation audit centre de commutation mobile, et ledit centre de commutation mobile reçoit ledit message d'achèvement d'assignation implémentant l'établissement de son support.

3. Méthode pour établir le support de protocole Internet selon la revendication 1, dans laquelle
lorsque ledit terminal mobile est la partie appelée, ladite étape d'information comprend :
a) ledit centre de commutation mobile initie une demande d'appel sémaphone vers ledit terminal mobile ;
b) ledit terminal mobile reçoit ladite demande d'appel sémaphone et envoie un message de demande de service de gestion des appels audit centre de commutation mobile ;
c) ledit centre de commutation mobile sélectionne conformément à un type de service dudit message de demande de service de gestion des appels un codage correspondant, une adresse de protocole Internet locale et un numéro de port du centre de commutation mobile, converti en le code d'identité de circuit correspondant en cherchant dans la table de correspondance conformément à l'adresse de protocole Internet et au numéro de port et informe ledit contrôleur de station de base par le message de demande d'assignation ;
d) ledit contrôleur de station de base, en cherchant conformément au code d'identité de circuit dans ledit message de demande d'assignation dans la table de correspondance qui y est contenue, acquiert l'adresse de protocole Internet et le numéro de port dudit centre de commutation mobile et l'adresse de protocole Internet locale et le numéro de port du contrôleur de station de base implémentant l'établissement de son support, envoie un message d'achèvement d'assignation audit centre de commutation mobile, et ledit centre de commutation mobile reçoit ledit message d'achèvement d'assignation implémentant l'établissement de son support.

4. Méthode pour établir le support de protocole Internet selon la revendication 1, dans laquelle
lors de l'accomplissement d'un transfert, ladite étape d'information comprend :
a) ledit centre de commutation mobile sélectionne conformément à un type de service d'un message de demande de transfert un codage correspondant, une adresse de protocole Internet locale et un numéro de port du centre de commutation mobile, converti en le code d'identité de circuit correspondant en cherchant dans la table de correspondance et informe ledit contrôleur de station de base par le message de demande de transfert ;
b) ledit contrôleur de station de base, en cherchant conformément au code d'identité de circuit dans ledit message de demande de transfert dans la table de correspondance qui y est contenue, acquiert l'adresse de protocole Internet et le numéro de port dudit centre de commutation mobile et une adresse de protocole Internet et un numéro de port du contrôleur de station de base implémentant l'établissement de son support, envoie un message de confirmation de demande de transfert audit centre de commutation mobile, et ledit centre de commutation mobile reçoit ledit message de confirmation de demande de transfert implémentant l'établissement de son support.

5. Méthode pour établir le support de protocole Internet selon la revendication 1, dans laquelle
une fois le support de protocole Internet établi, ladite méthode comprend en outre les étapes suivantes : après la fin d'un appel, ledit centre de commutation mobile et le contrôleur de station de base libèrent respectivement le support rattaché à l'appel. commutation mobile et le contrôleur de station de base libèrent.
